# EUROPEAN PATENT APPLICATION

(11) **EP 3 800 608 A1**
(43) Date of publication of application: **07.04.2021**
(21) Application number: 18921714.4
(22) Date of filing: 05.06.2018
(51) Int. Cl.: G06Q 40/04

(54) **ORDER PROCESSING DEVICE, ISSUER DEVICE, AND SYSTEM**

(71) Applicant: GVE Ltd., Chuo-ku Tokyo 1030026 (JP)
(72) Inventor: FUSA Koji, Tokyo 103-0026 (JP); KUSAKABE Yu, Tokyo 103-0026 (JP); TAKAMATSU Keita, Tokyo 103-0026 (JP)
(74) Representative: Vossius & Partner Patentanwälte Rechtsanwälte mbB
(86) International application number: PCT/JP2018/021442
(87) International publication number: WO 2019/234806

(57) **Abstract**

Provided is a device and the like which enable supply of a financial instrument to be automatically determined based on the supply and demand therefor in the market.

An order processing device connected via a network to a plurality of user devices respectively operated by a plurality of users and to an issuer device operated by an issuer of a financial instrument, wherein the order processing device: includes an order information storage device and an execution information storage device; receives order information respectively from the plurality of user devices and the issuer device and stores in the order information storage device the respective pieces of received order information; and matches and executes order information of which trading type indicates a "sell" and order information of which trading type indicates a "buy" from among the pieces of order information that are stored in the order information storage device, deletes the pieces of executed order information from the order information storage device, and stores execution information in the execution information storage device.

## Description

### [Technical Field]

The present invention relates to an order processing device, an issuer device, and a system.

### [Background Art]

Systems each including a plurality of terminals which transmit order information on a financial instrument and a server which receives the order information from the plurality of terminals via a network to process the order information are proposed (refer to PTL 1 and PTL 2).

### [Citation List]

### [Patent Literature]

[PTL 1] Japanese Patent Application Laid-open No. 2003-196480
[PTL 2] Japanese Patent Application Laid-open No. 2010-204721

### [Summary of Invention]

### [Technical Problem]

If financial instrument issuers themselves are enabled to place sell orders in a similar manner to institutional investors and private investors, favorably the supply of financial instruments is automatically determined based on the supply and demand therefor in the market.

### [Solution to Problem]

An embodiment of the present invention is configured as follows.

An order processing device connected via a network to a plurality of user devices respectively operated by a plurality of users and to an issuer device operated by an issuer of a financial instrument, the plurality of user devices transmitting, to the order processing device, one or more pieces of order information that designates a trading type indicating a "sell" or a "buy" of the financial instrument, a price of the financial instrument, and an amount of the financial instrument, the issuer device transmitting, to the order processing device, two or more pieces of order information that designate a trading type indicating a "sell" of the financial instrument, a price of the financial instrument, and an amount of the financial instrument, the two or more pieces of order information, which designate a trading type indicating a "sell" and which are transmitted by the issuer device, including two or more pieces of order information which designate different prices, the order processing device: including an order information storage device and an execution information storage device; receiving order information respectively from the plurality of user devices and the issuer device and storing in the order information storage device the respective pieces of received order information; and matching and executing order information of which trading type indicates a "sell" and order information of which trading type indicates a "buy" from among the pieces of order information stored in the order information storage device, and deleting the order information related to the execution from the order information storage device, and moreover storing execution information in the execution information storage device.

### [Advantageous Effects of invention]

According to the embodiment of the present invention, financial instrument issuers themselves are able to place sell orders in a similar manner to institutional investors and private investors, hence, a device and a system which enable supply of the financial instruments to be automatically determined based on the supply and demand therefor in the market can be provided.

### [Brief Description OF Drawings]

[Fig. 1A]

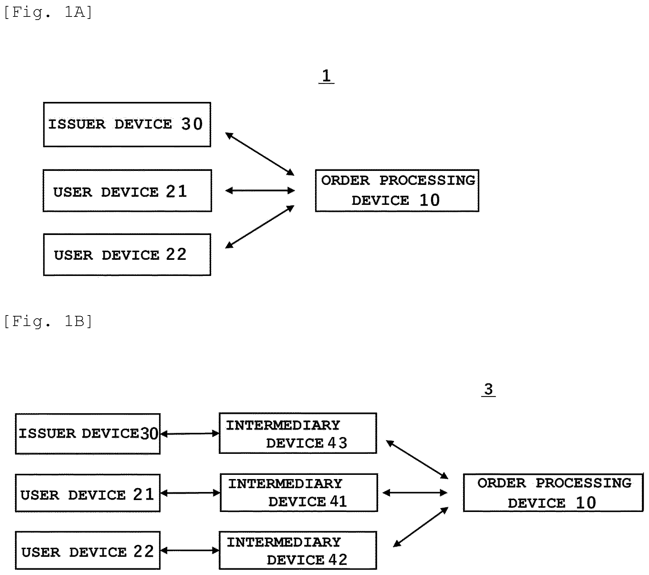

   Fig. 1A is a diagram showing a configuration example of a system according to a first embodiment.
[Fig. 1B]
   Fig. 1B is a diagram showing another configuration example of the system according to the first embodiment.
[Fig. 2]

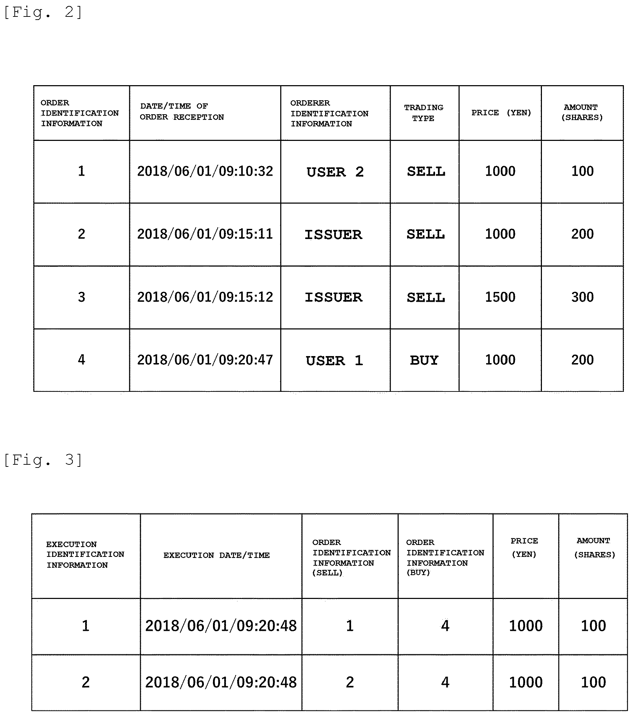

   Fig. 2 is a diagram showing a storage example in an order information storage device.
[Fig. 3]
   Fig. 3 is a diagram showing a storage example in an execution information storage device.
[Fig. 4]

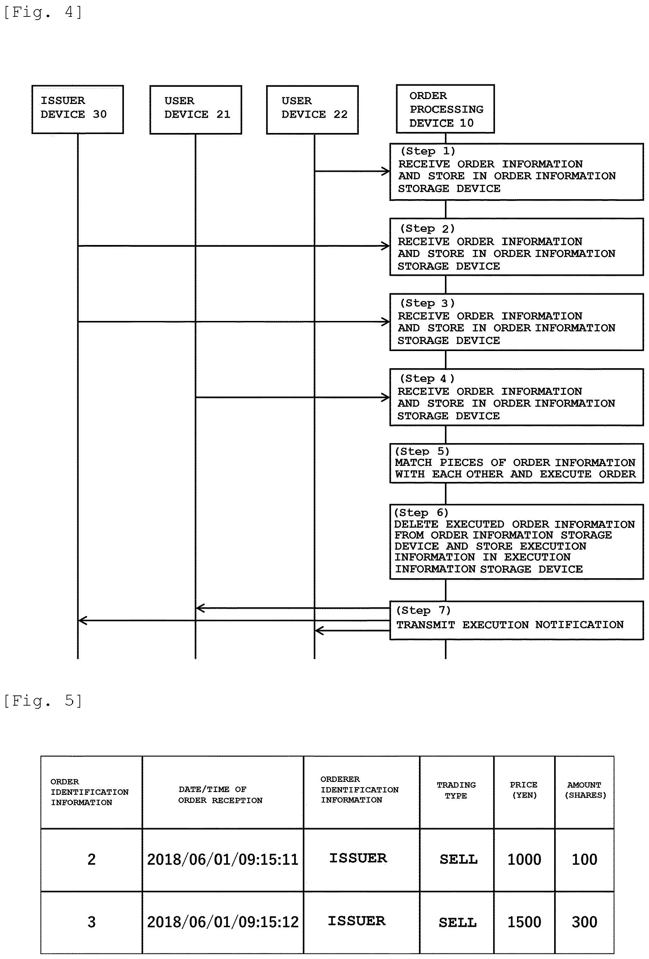

   Fig. 4 is a sequence diagram for explaining an operation example of the system according to the first embodiment.
[Fig. 5]
   Fig. 5 is a diagram showing a storage example in the order information storage device.
[Fig. 6]

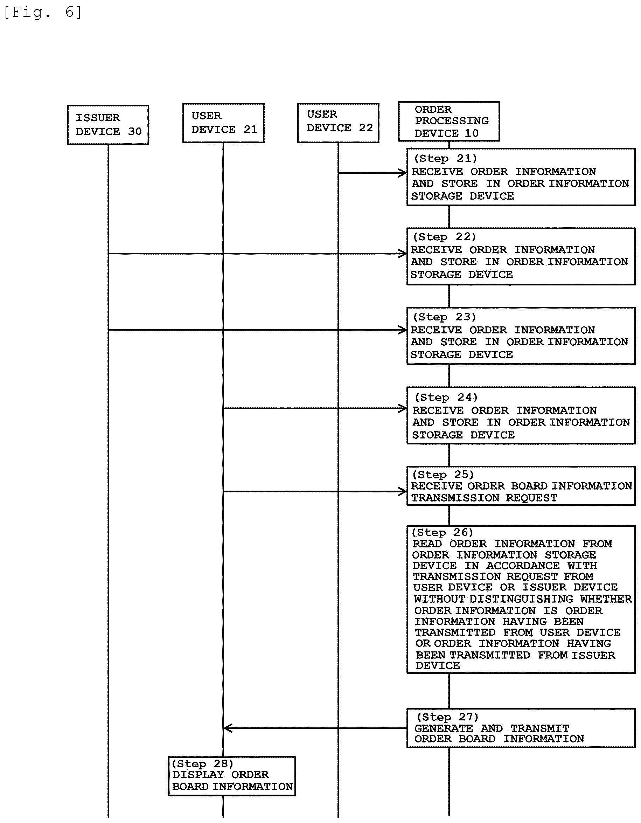

   Fig. 6 is a sequence diagram for explaining an operation example of a system according to a second embodiment.
[Fig. 7]

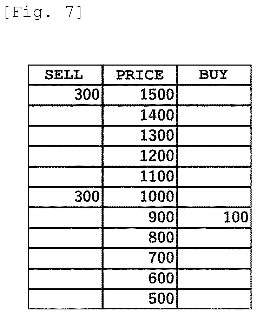

   Fig. 7 is a diagram showing a display example of order board information.

### [Description of Embodiments]

### [System 1 according to first embodiment]

Fig. 1 is a diagram showing a configuration example of a system according to a first embodiment. As shown in Fig. 1, a system 1 according to the first embodiment includes an order processing device 10, a plurality of user devices 21 and 22 which are respectively operated by a plurality of users, and an issuer device 30 which is operated by an issuer of a financial instrument. The order processing device 10 is connected to the plurality of user devices 21 and 22 and the issuer device 30 via a network (including a communication line and a communication device such as a router) such as the Internet. A "financial instrument" refers to products in general in financial transactions and examples thereof include a legal currency, a cryptocurrency, shares of a listed company, shares of a non-listed company, commodity futures, and a derivative instrument thereof. However, a "financial instrument" in the present specification is limited to a financial instrument of which an issuer exists. In other words, a financial instrument of which an issuer does not exist is excluded from a "financial instrument" in the present specification. Hereinafter, the system 1 according to the first embodiment will be described in detail.

### (Plurality of user devices 21 and 22)

The plurality of user devices 21 and 22 are devices respectively operated by a plurality of users. A user is a person who transmits order information to the order processing device 10 and examples thereof include an owner of a financial instrument and a person entrusted with the management of a financial instrument such as an institutional investor or a private investor. Users do not include an issuer of a financial instrument. An "operation" in the present specification includes an automatic operation using a program in addition to a manual operation.

The user devices 21 and 22 may be devices that are operated by a user himself/herself or devices that are operated by a person entrusted by a user in place of the user. In the present specification, even a device in the latter case will be considered a device that is operated by a user. Examples of the device include a desktop computer, a laptop computer, a smart phone, a smart watch, and a tablet computer.

The user devices 21 and 22 transmit one or more pieces of order information to the order processing device 10. One piece of order information may be collectively transmitted in one go or may be transmitted over a plurality of transmissions. For example, order information may be transmitted while being stored in a payload section of a packet.

The order information that is transmitted by the user devices 21 and 22 is information that at least designates a trading type indicating a "sell" or a "buy" of a financial instrument, a price of the financial instrument, and an amount of the financial instrument. For example, when selling 1,000 shares of a company's stock at 150 yen per share, the order information is information that at least designates a trading type = "sell", a price = 150 yen, and an amount = 1,000 shares.

Cases where order information designates a trading type or the like include, in addition to cases where the order information contains information indicating a trading type or the like itself, cases where the order information does not contain information indicating a trading type or the like itself but a trading type or the like can nevertheless be specified by taking other information into consideration, performing a predetermined calculation, or the like. Examples of the former cases where the order information contains information indicating a trading type or the like itself include cases where a trading type or the like can be read from the order information. Examples of the latter cases include cases where the order processing device 10 stores, in advance, a correspondence table or the like in which a trading type or the like and a predetermined symbol are associated with each other, order information includes the symbol, and a trading type or the like can be specified by having the order processing device 10 read the symbol from the order information and read the trading type or the like corresponding to the symbol from the correspondence table or the like.

Each of the user devices 21 and 22 may directly transmit order information to the order processing device 10 as shown in Fig. 1A or transmit the order information via intermediary devices 41 and 42 that are operated by an intermediary such as a brokerage as shown in Fig. 1B. In the latter case, the order information is transmitted from the user devices 21 and 22 to the intermediary devices 41 and 42 and the intermediary devices 41 and 42 transmit the order information to the order processing device 10. In this case, the order information transmitted from the intermediary devices 41 and 42 need only be information designating a trading type, a price, and an amount which are designated by the order information from the user devices 21 and 22 and may be information that additionally designates other information. In both cases, in the present specification, it is assumed that the user devices 21 and 22 transmit order information to the order processing device 10.

The order information may be information that further designates information such as orderer identification information. Orderer identification information is information for identifying an orderer and, for example, when the user devices 21 and 22 directly transmit order information to the order processing device 10, information for identifying the user represents an example of orderer identification information. In addition, for example, when the user device 21 and 22 transmit order information to the order processing device 10 via the intermediary devices 41 and 42 that are operated by an intermediary such as a brokerage, information for identifying the user and/or information for identifying the intermediary such as a brokerage represent examples of orderer identification information.

### (Issuer device 30)

The issuer device 30 is a device that is operated by an issuer of a financial instrument. An issuer is a person who had issued a financial instrument. For example, when the financial instrument is a legal currency, a central bank represents an example of the issuer, when the financial instrument is shares of stock, a corporation represents an example of the issuer, and when the financial instrument is commodity futures, an issuer of the commodity futures represents an example of the issuer. Users are not included in issuers of a financial instrument.

The issuer device 30 may be a device that is operated by an issuer himself/herself or a device that is operated by a person entrusted by the issuer in place of the issuer. In the present specification, even a device in the latter case will be considered a device that is operated by an issuer. Examples of the device include a desktop computer, a laptop computer, a smart phone, a smart watch, and a tablet computer.

The issuer device 30 transmits two or more pieces of order information to the order processing device 10. The two or more pieces of order information include two or more pieces of order information that designate different prices. For example, when the issuer device 30 transmits two pieces of order information, namely, first order information and second order information, a price designated by the second order information differs from a price designated by the first order information. However, the two or more pieces of order information may include order information that designate a same price as long as two or more pieces of order information that designate different prices are also included. For example, for example, when the issuer device 30 transmits three pieces of order information, namely, first order information, second order information, and third order information and a price designated by the second order information differs from a price designated by the first order information, a price designated by the third order information may be the same as or may differ from the prices designated by the first order information and the second order information.

As described above, when it is assumed that the issuer device 30 transmits two or more pieces of order information and the two or more pieces of order information include two or more pieces of order information that designate different prices, since the pieces of order information transmitted from the issuer device 30 designate prices in a stepwise manner, a sell or a buy by the issuer can be prevented from creating a significant selling pressure or a buying pressure in the market and a risk of an order placed by the issuer disrupting a balance of supply and demand can be reduced. For example, when the financial instrument is shares of stock, there are often cases where the issuer does not urgently require funding but desires to raise funds with the shares only when a share price rises from a current share price in order to implement a long-term growth strategy. With conventional systems, there is a problem that a large sell order at a same price is to be placed which will dampen market sentiment. However, when desiring to raise funds to the sum of 400,020,000 yen by newly issuing shares only when a share price of a corporation which is currently lower than 15,000 yen per share rises to or above 15,000, according to the present embodiment, pieces of order information for sell which designate prices in small incremental steps can be transmitted from the issuer device 30 by, for example, placing a sell order for one share in one yen increments from 15,000 yen to 25,000 yen per share. In this case, since the market will feel that there is no heavy selling at a single price such as 15,000 yen or 17,500 yen as compared to cases of selling 26,668 shares at 15,000 yen per share and selling 20,001 shares at 17,500 yen per share, selling pressure is reduced.

Each of the pieces of order information may be collectively transmitted in one go or may be transmitted over a plurality of transmissions.

Cases where the issuer device 30 transmits two or more pieces of order information include, in addition to cases where the issuer device 30 collectively transmits the two or more pieces of order information, cases where the issuer device 30 transmits, one at a time, the two or more pieces of order information. In the latter case, when the order processing device 10 does not receive a total of two or more pieces of order information within a predetermined period from the issuer device 30, the order processing device 10 can discard or invalidate all of the pieces of order information received from the issuer device 30. The issuer device 30 transmitting two or more pieces of order information means that at least two pieces of order information are to be transmitted from the issuer device 30 within the predetermined period and, after the predetermined period elapses, even if two pieces of order information have been transmitted from the issuer device 30 up to that point, the pieces of order information can be discarded or invalidated by the order processing device 10 unless two or more pieces of order information are newly transmitted.

The order information transmitted by the issuer device 30 is information that at least designates a trading type indicating a "sell" of a financial instrument, a price of the financial instrument, and an amount of the financial instrument. For example, in a similar manner to the case of the user devices 21 and 22, when selling 1,000 shares of a company's stock at 150 yen per share, the order information is information that designates a trading type = "sell", a price = 150 yen, and an amount = 1,000 shares.

Preferably, the issuer device 30 is capable of further transmitting, to the order processing device 10, two or more pieces of order information that designate a trading type indicating a "buy" of the financial instrument, a price of the financial instrument, and an amount of the financial instrument. In this case, the two or more pieces of order information which designate a trading type indicating a "buy" and which are transmitted by the issuer device 30 include two or more pieces of order information that designate different prices. Accordingly, a decline in the price of the financial instrument can be suppressed by a buy by the issuer himself/herself.

While two or more pieces of order information are to be transmitted from the issuer device 30, the two or more pieces of order information must be two or more pieces of order information that designate a trading type indicating a "sell" or must be two or more pieces of order information that designate a trading type indicating a "buy". In other words, a case where only one piece of order information that designates a trading type indicating a "sell" and one piece of order information that designates a trading type indicating a "buy" have been transmitted is not included in cases where two or more pieces of order information are transmitted.

Preferably, the two or more pieces of order information that are transmitted by the issuer device 30 all designate an unexecuted price within a predetermined period as the price. An unexecuted price refers to a price at which a transaction has not been executed. In particular, when the two or more pieces of order information that are transmitted by the issuer device 30 indicate a trading type of a "sell", the pieces of order information preferably designate an unexecuted price that is higher than any of executed prices within a predetermined period as the price. For example, when transactions are executed only between 100 yen and 300 yen from the start of a given year to the end of the year, a value exceeding 300 yen is preferably designated as the price. In addition, when the two or more pieces of order information that are transmitted by the issuer device 30 indicate a trading type of a "buy", the pieces of order information preferably designate an unexecuted price that is lower than any of executed prices within a predetermined period as the price. For example, when transactions are executed only between 100 yen and 300 yen from the start of a given year to the end of the year, a value lower than 100 yen is preferably designated as the price. Accordingly, since order information transmitted from the issuer device 30 can be configured to designate a sell or a buy at a new high or a new low within a predetermined period, order information of a sell can be transmitted from the issuer device 30 only when there is a heightened demand for a financial instrument or order information of a buy can be transmitted from the issuer device 30 only when the demand for the financial instrument is low. Therefore, a sell and a buy of a financial instrument by the issuer himself/herself can be realized without imparting a negative psychological effect to market supply and demand.

Otherwise, since modes in which order information designates a trading type or the like, whether or not order information is transmitted via the intermediary device 43, the fact that order information may be information that further designates information such as orderer identification information, and the like are similar to those in the case of the user devices 21 and 22, descriptions thereof will be omitted.

### (Order processing device 10)

The order processing device 10 is a device that is operated by, for example, an exchange, a clearing house, or the like or by a person entrusted by such entities. The order processing device 10 is constituted by a server or the like and can include a storage device such as RAM or a hard disk in addition to an arithmetic processing unit such as a CPU.

The order processing device 10 includes an order information storage device and an execution information storage device. For example, the order information storage device and the execution information storage device may be configured as hardware as separate storage devices or may be configured as separate storage areas in a single storage device. Hereinafter, the order information storage device and the execution information storage device will be described with reference to Figs. 2 and 3.

### (Storage example in order information storage device)

Fig. 2 is a diagram showing a storage example in the order information storage device. As shown in Fig. 2, the order information storage device stores order identification information, a date/time of order reception, and order information. Order information being stored means that, for example, information designated by order information is stored. Order identification information refers to information for identifying order information and, for example, when the order processing device 10 receives order information, order identification information is generated according to a predetermined rule and assigned to the received order information. The date/time of order reception is the date and time at which the order information is received.

### (Storage example in execution information storage device)

Fig. 3 is a diagram showing a storage example in the execution information storage device. As shown in Fig. 3, the execution information storage device stores execution information. For example, execution information includes execution identification information, an execution date/time, order identification information (sell), order identification information (buy), a price, and an amount. Execution identification information is information for identifying an execution and, for example, every time an order is executed, the order processing device 10 generates execution identification information according to a predetermined rule and assigns the generated execution identification information to the execution. The execution date/time is the date and time at which an order is executed or, more specifically, the date and time at which the order processing device 10 matches pieces of order information and executes an order. The order identification information (sell) is order identification information for identifying an executed order information that designates a trading type of "sell". The order identification information (buy) is order identification information for identifying an executed order information that designates a trading type of "buy". The price and the amount represent an executed price and amount.

In the order information storage device and the execution information storage device, pieces of information are stored in association with each other. In the present embodiment, for example, it is assumed that pieces of information are stored in a table format, and respective pieces of information are associated with each other by storing the pieces of information in different columns of a same row. It should be noted that yen and shares which are units of the price and the amount shown in Figs. 2 and 3 are merely examples and that the units are not limited thereto.

The order processing device 10 matches order information indicating that a trading type is a "sell" with order information indicating that a trading type is a "buy" among the pieces of order information stored in the order information storage device and executes an order, deletes the pieces of order information related to the executed order from the order information storage device, and stores execution information in the execution information storage device.

### (Operation example)

Fig. 4 is a sequence diagram for explaining an operation example of the system according to the first embodiment. Hereinafter, an operation example of the system 1 according to the first embodiment will be described with reference to Fig. 4 using an example of a case where a financial instrument is shares of stock.

### (Steps 1, 2, 3, and 4)

First, the order processing device 10 respectively receives order information from the plurality of user devices 21 and 22 and the issuer device 30 and stores the respectively received pieces of order information in the order information storage device.

In the present embodiment, the order processing device 10 first receives order information (orderer identification number = "user 2", trading type = sell, price = 1,000 yen, and amount = 100 shares) from the user device 22, associates order identification information = 1, reception date/time = 2018/06/01/09:10:32, orderer identification number = "user 2", trading type = sell, price = 1,000 yen, and amount = 100 shares with each other, and stores the associated information in the order information storage device (step 1).

Next, the order processing device 10 receives order information (orderer identification number = "issuer", trading type = sell, price = 1,000 yen, and amount = 200 shares) from the issuer device 30, associates order identification information = 2, reception date/time = 2018/06/01/09:15:11, orderer identification number = "issuer", trading type = sell, price = 1,000 yen, and amount = 200 shares with each other, and stores the associated information in the order information storage device (step 2).

Next, the order processing device 10 receives order information (orderer identification number = "issuer", trading type = sell, price = 1,500 yen, and amount = 300 shares) from the issuer device 30, associates order identification information = 3, reception date/time = 2018/06/01/09:15:12, orderer identification number = "issuer", trading type = sell, price = 1,500 yen, and amount = 300 shares with each other, and stores the associated information in the order information storage device (step 3).

Next, the order processing device 10 receives order information (orderer identification number = "user 1", trading type = buy, price = 1,000 yen, and amount = 200 shares) from the user device 21, associates order identification information = 4, reception date/time = 2018/06/01/09:20:47, orderer identification number = "user 1", trading type = buy, price = 1,000 yen, and amount = 200 shares with each other, and stores the associated information in the order information storage device (step 4).

Accordingly, respective pieces of information are stored in the order information storage device as shown in Fig. 2 described earlier.

### (Step 5)

Next, the order processing device 10 matches order information indicating that a trading type is a "sell" with order information indicating that a trading type is a "buy" among the pieces of order information stored in the order information storage device and executes an order. A matching method is not particularly limited and matching can be performed using various systems such as the Itayose (call auction) system, the Zaraba (continuous trading) system, the market making system, and the crossing system. In the present embodiment, it is assumed that matching is to be performed according to the Zaraba system and that, based on the principle of price priority and the principle of time priority, an order is to be executed with respect to all of an amount designated by order information of a "sell" that is identified by the order identification information 1, a part of an amount designated by order information of a "sell" that is identified by the order identification information 2, and all of an amount designated by order information of a "buy" that is identified by the order identification information 4 among the pieces of order identification information 1, 2, 3, and 4 that are stored in the order information storage device.

When order information (in particular, orderer identification information for identifying that the orderer is an issuer) from the issuer device 30 and order information (in particular, orderer identification information for identifying that the orderer is a user) from the user devices 21 and 22 that designate a same trading type as the order information from the issuer device 30 are associated with a given price in the order information storage device, the order processing device 10 can perform matching by prioritizing the order information from the issuer device 30 over the order information from the user devices 21 and 22. For example, in the storage example shown in Fig. 2, while pieces of order information designating a "sell" that are identified by the pieces of order identification information 1 and 2 are associated with a price = 1000 yen, since the order information that is identified by the order identification information 1 is order information transmitted from the user device 22 and the order information that is identified by the order identification information 2 is order information transmitted from the issuer device 30, the order processing device 10 can perform matching and execute an order by prioritizing the order information that is identified by the order identification information 2 over the order information that is identified by the order identification information 1. Accordingly, at the same price, order information that is transmitted from the issuer device 30 can be prioritized when executing an order. Therefore, by announcing in advance that the financial instrument is to be newly issued by placing a sell order by the issuer of a financial instrument for a certain amount at a certain price, when a transaction at the certain price is completed, a trade volume of the completed transaction provides an automatic announcement effect in that all market participants will simultaneously know how much funds the issuer had been able to raise by the sell order.

### (Step 6)

Next, the order processing device 10 deletes the executed pieces of order information from the order information storage device and stores execution information in the execution information storage device. Accordingly, respective pieces of information are stored in the order information storage device as shown in Fig. 5 and respective pieces of information are stored in the execution information storage device as shown in Fig. 3 described earlier. In the present embodiment, the order processing device 10 deletes the pieces of order information that are identified by the pieces of order identification information 1 and 4 from the order information storage device and reduces the amount designated by the order information that is identified by the order identification information 2 to "100". In this manner, although with respect to order information of which an entirety of an amount thereof is executed, the order information itself is deleted from the order information storage device and, with respect to order information of which a part of an amount thereof is executed, the amount designated by the order information is reduced in accordance with the executed amount, deletion of order information from the order information storage device in the present specification includes deletion of an amount designated by order information in the latter case in addition to deletion of the order information itself in the former case. In other words, deleting an executed order information from the order information storage device includes reducing the amount designated by the order information that is identified by the order identification information 2 to "100" in addition to deleting the pieces of order information themselves that are identified by the pieces of order identification information 1 and 4. It should be noted that modes of deletion include invalidating or canceling information in the order information storage device in addition to erasing the information from the order information storage device.

### (Step 7)

Next, the order processing device 10 transmits an execution notification to the user devices 21 and 22 or the issuer device 30 having transmitted the order information for which an order has been executed. In the present embodiment, since an order is to be executed with respect to all of an amount designated by order information of a "sell" that is identified by the order identification information 1, a part of an amount designated by order information of a "sell" that is identified by the order identification information 2, and all of an amount designated by order information of a "buy" that is identified by the order identification information 4, the execution notification is transmitted from the order processing device 10 to the user devices 21 and 22 and the issuer device 30.

As described above, according to the present embodiment, since an issuer of a financial instrument himself/herself is able to place a plurality of sell orders in a similar manner to institutional investors and private investors, the order processing device 10 and the system 1 can be provided which enable supply of the financial instrument to be automatically determined based on supply and demand in market. Therefore, for example, an issuer of a financial instrument can raise funds based on a market principle that supply of the financial instrument is determined based on supply and demand for the financial instrument in the market while reducing psychological selling pressure that is generated when selling at a same price. In addition, when newly issuing a financial instrument, since a price in accordance with supply and demand is automatically determined by the market, an occurrence of a strain on supply and demand of the market in that a market price or a procurement price of the financial instrument to be newly issued becomes inappropriately low only during a funding period (for example, a period until a sell of the financial instrument to be newly issued is completed) is also suppressed. Furthermore, when the financial instrument is shares of stock, since funds can be raised in the market without involving underwriting by a brokerage or the like, new issue cost can be kept low.

In addition, for example, when the financial instrument is a cryptocurrency, an issuer of the cryptocurrency can raise the price in small incremental steps and newly issue a small amount of the cryptocurrency with respect to each small incremental price. Furthermore, for example, when the financial instrument is shares of a corporation, the corporation can newly issue shares as its price rises to increase capital in a stepwise manner. In this case, since an issuance of new shares and a capital increase can be performed in accordance with supply and demand instead of imparting significant selling pressure to the market at a single given price, selling pressure can be reduced. In addition, when the financial instrument is a legal currency, the legal currency can be used to sell home currency or buy foreign currency in small increments in amounts that are lower than a trading volume of a foreign exchange market. This is particularly effectively used by a government or a central bank of a country with low foreign currency reserves for the purpose of increasing such foreign currency reserves. Furthermore, a country with a certain high level of foreign currency reserves can sell a foreign currency with a high level of reserves while reducing a psychological impact to the market to acquire a foreign currency with a low level of reserves.

### [System according to second embodiment]

Fig. 6 is a sequence diagram for explaining an operation example of a system according to a second embodiment, and Fig. 7 is a diagram showing a display example of order board information. As shown in Fig. 6, the system according to the second embodiment differs from the system 1 according to the first embodiment in that the order processing device 10 generates order board information and transmits the generated order board information to the user devices 21 and 22 or the issuer device 30. Since configurations and operations are otherwise the same, descriptions thereof will be omitted and operations that are different will be mainly described.

### (Steps 21, 22, 23, and 24)

First, the order processing device 10 respectively receives order information from the plurality of user devices 21 and 22 and the issuer device 30 and stores the respectively received pieces of order information in the order information storage device. Since these steps are the same as the steps 1, 2, 3, and 4 described earlier, a description thereof will be omitted. However, in step 24, it is assumed that the order processing device 10 receives order information (orderer identification number = "user 1", trading type = buy, price = 900 yen, and amount = 100 shares) from the user device 21, associates order identification information = 4, reception date/time = 2018/06/01/09:20:47, orderer identification number = "user 1", trading type = buy, price = 900 yen, and amount = 100 shares with each other, and stores the associated information in the order information storage device.

### (Step 25)

Next, the order processing device 10 receives an order board information transmission request from the user devices 21 and 22 or the issuer device 30. In the present embodiment, it is assumed that the order board information transmission request is received from the user device 21.

### (Step 26)

Next, the order processing device 10 reads order information from the order information storage device in accordance with the order board information transmission request from the user devices 21 and 22 or the issuer device 30 without distinguishing whether the order information is order information having been transmitted from the user devices 21 and 22 or order information having been transmitted from the issuer device 30. Accordingly, the order information having been transmitted from the issuer device 30 is handled in a similar manner to the order information having been transmitted from the user devices 21 and 22. It should be noted that reading order information refers to reading a trading type, a price, an amount and the like designated by the order information.

### (Step 27)

Next, the order processing device 10 generates order board information based on the read order information and transmits the generated order board information to the user devices 21 and 22 or the issuer device 30. In the present embodiment, since the order board information transmission request has been transmitted from the user device 21, the generated order board information is transmitted to the user device 21. It should be noted that order board information refers to information for, for example, as shown in Fig. 7, displaying a price at a center of a screen and, in correspondence with the price at center, displaying order information (an amount) of which trading type is "sell" to the left when facing the screen and displaying order information (an amount) of which trading type is "buy" to the right when facing the screen.

### (Step 27)

Next, the user devices 21 and 22 or the issuer device 30 display the order board information received from the order processing device 10 on their own screen. In the present embodiment, the user device 21 displays the order board information received from the order processing device 10 on its own screen. Accordingly, for example, the order board information shown in Fig. 7 described earlier is displayed on the screen of the user device 21.

As described above, with the system according to the second embodiment, since pieces of order information transmitted from the plurality of user devices 21 and 22 and order information transmitted from the issuer device 30 are displayed in a mixed manner in order board information, a device and a system which cause a sell or a buy by an issuer to be displayed as a part of market supply and demand can be provided.

While embodiments have been described above, the description is not intended to limit in any way the configurations described in the claims.

### [Reference Signs List]

1, 3 System
10 Order processing device
21, 22 User device
30 Issuer device
41, 42, 43 Intermediary device

## Claims

1. An order processing device connected via a network to a plurality of user devices respectively operated by a plurality of users and to an issuer device operated by an issuer of a financial instrument,
the plurality of user devices transmitting, to the order processing device, one or more pieces of order information that designates a trading type indicating a "sell" or a "buy" of the financial instrument, a price of the financial instrument, and an amount of the financial instrument,
the issuer device transmitting, to the order processing device, two or more pieces of order information that designate a trading type indicating a "sell" of the financial instrument, a price of the financial instrument, and an amount of the financial instrument,
the two or more pieces of order information, which designate a trading type indicating a "sell" and which are transmitted by the issuer device, including two or more pieces of order information which designate different prices,
the order processing device:
including an order information storage device and an execution information storage device;
receiving order information respectively from the plurality of user devices and the issuer device and storing in the order information storage device the respective pieces of received order information; and
matching and executing order information of which trading type indicates a "sell" and order information of which trading type indicates a "buy" from among the pieces of order information stored in the order information storage device, and deleting the executed order information from the order information storage device, and storing execution information in the execution information storage device.

2. The order processing device according to claim 1, wherein
the issuer device further transmits, to the order processing device, two or more pieces of order information that designate a trading type indicating a "buy" of the financial instrument, a price of the financial instrument, and an amount of the financial instrument, and
the two or more pieces of order information which designate a trading type indicating a "buy" and which are transmitted by the issuer device include two or more pieces of order information which designate different prices.

3. The order processing device according to claim 1 or 2, which
reads the order information from the order information storage device in accordance with a transmission request from the user devices or the issuer device without distinguishing whether the order information is order information having been transmitted from the user devices or order information having been transmitted from the issuer device;
generates order board information based on the read order information; and
transmits the generated order board information to the user devices or the issuer device.

4. The order processing device according to any one of claims 1 to 3, wherein the two or more pieces of order information that are transmitted by the issuer device all designate an unexecuted price within a predetermined period as the price.

5. The order processing device according to any one of claims 1 to 4, which performs the matching by prioritizing the order information received from the issuer device over the order information received from the user devices.

6. The order processing device according to any one of claims 1 to 5, wherein the financial instrument is a legal currency, a cryptocurrency, shares of a listed company, shares of a non-listed company, commodity futures, or a derivative instrument thereof.

7. An issuer device which is connected to the order processing device according to any one of claims 1 to 6 via a network and which is operated by an issuer of the financial instrument.

8. A system, comprising: the order processing device according to any one of claims 1 to 6 which is connected via a network to the plurality of user devices; and the issuer device which is connected via a network to the order processing device.
